# EUROPÄISCHE PATENTSCHRIFT

(11) **EP 0 730 510 B1**
(45) Veröffentlichungstag und Bekanntmachung des Hinweises auf die Patenterteilung: **26.01.2000**
(21) Anmeldenummer: 95900733.7
(22) Anmeldetag: 14.11.1994
(51) Int. Cl.: B23Q 5/32, B23Q 17/22, G05B 19/416

(54) **MOBILES PRÄZISIONS-BOHRGERÄT**
MOBILE PRECISION BORING TOOL
OUTILLAGE MOBILE D'ALESAGE DE PRECISION

(30) Priorität: 23.11.1993 DE 4339770
(43) Veröffentlichungstag der Anmeldung: 11.09.1996
(60) Teilanmeldung: 97122729.3
(73) Patentinhaber: JOHANNES LÜBBERING AG, 6301 Zug (CH)
(72) Erfinder: LÜBBERING, Johannes, D-33442 Herzebrock (DE)
(74) Vertreter: Patentanwälte Dipl.-Ing. Bodo Thielking Dipl.-Ing. Otto Elbertzhagen
(86) Internationale Anmeldenummer: EP9403771
(87) Internationale Veröffentlichungsnummer: WO9514550

(56) Entgegenhaltungen:
- GB-A- 2 218 268
- US-A- 4 076 442
- US-A- 4 688 970
- US-A- 5 123 789

## Beschreibung

Die Erfindung bezieht sich auf ein mobiles Bohrgerät der im Gattungsbegriff des Patentanspruchs 1 näher bezeichneten Art.

Ein solches Bohrgerät, siehe US,A,4688970, das der nächsten Stand der Technik darstellt, wird bei allen Präzisions-Bohrarbeiten eingesetzt, bei denen die Werkstücke eine solche Größe haben, daß sie nicht auf stationären Bohrmaschinen bearbeitet werden können. Ein bevorzugter Anwendungsbereich dieser Bohrgeräte findet sich in der Luftfahrtindustrie, um beispielsweise im Flugzeugbau diejenigen Bohrungen zu bearbeiten, die für die Verbindung zwischen einem Flugzeugrumpf und den Tragflächen vorzusehen sind. Das jeweilige Bohrgerät wird entweder an einer Hilfsvorrichtung fest angebracht oder im variablen Einsatz in Verriegelungsbuchsen, in Schablonen oder in ähnliche Aufnahmevorrichtungen eingesetzt. Eine besonders exakte Bearbeitungsgenauigkeit derartiger Bohrgeräte wird beim Aufreiben voreingebrachter Bohrungen verlangt, wofür konische Reibwerkzeuge mit einem konischen Ansatz verwendet werden.

Ein erheblicher Nachteil bei bekannten Bohrgeräten der vorgenannten Art liegt in dem hohen Verbrauch an Schmiermittel, bei dem es sich um eine hochgualitative Bohrflüssigkeit handelt, die sehr teuer ist. Die Dosiermenge des Schmiermittels wird je nach Einschätzung des Bohr- oder Reibvorganges empirisch eingestellt, und zwar unabhängig von der Eingriffslänge des Werkzeugs. Das Schmiermittel wird kontinuierlich zugeführt und tritt über alle über die gesamte Schnittlänge hinweg verteilt angeordneten Radial- oder Querbohrungen des Werkzeugs aus, die von dem zentralen Schmiermittelkanal aus versorgt werden. Somit ergibt sich solange eine Überdosierung, wie nicht das Werkzeug auf gesamter Schneidlänge in Eingriff steht, auf die die Schmiermittelzufuhr abgestellt ist. Auch beim Zurückfahren des Werkzeugs ohne Bohr- bzw. Reibleistung wird bei den bekannten Geräten weiterhin das Schmiermittel ungenützt zugeführt. Insgesamt liegt deshalb der Verbrauch des Schmiermittels etwa zehnmal so hoch, wie er rein theoretisch für den eigentlichen Schnittvorgang benötigt wird.

Der Erfindung liegt deshalb die Aufgabe zugrunde, ein Präzisions-Bohrgerät der gattungsbildenden Art zu schaffen, bei dem der Schmiermittelverbrauch erheblich reduziert ist.

Diese Aufgabe wird bei einem gattungsgemäßen Präzisions-Bohrgerät nach der Erfindung durch die kennzeichnenden Merkmale des Patentanspruchs 1 gelöst.

Für die Erfindung ist wesentlich, daß zu Beginn des Bearbeitungsvorganges, solange das Werkzeug nur geringfügig im Materialeingriff steht, nur wenig Schmiermittel über die freigegebenen Querbohrungen des Werkzeugs zugegeben wird, wonach die Schmiermittelzugabe mit zunehmendem Bearbeitungseingriff unter weiterer Freigabe von Querbohrungen des Werkzeugs durch die gegenüber dem Werkzeug zurückbleibende Schmiermittellanze gesteigert wird.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert, dabei zeigen:
- Fig. 1: eine schematische Ansicht eines mobilen Bohrgerätes teilweise im Längsschnitt und
- Fig. 2: eine prinzipielle Darstellung der Zuführung des Schmiermittels zum Werkzeug des Bohrgerätes bei drei verschiedenen Werkzeugpositionen.

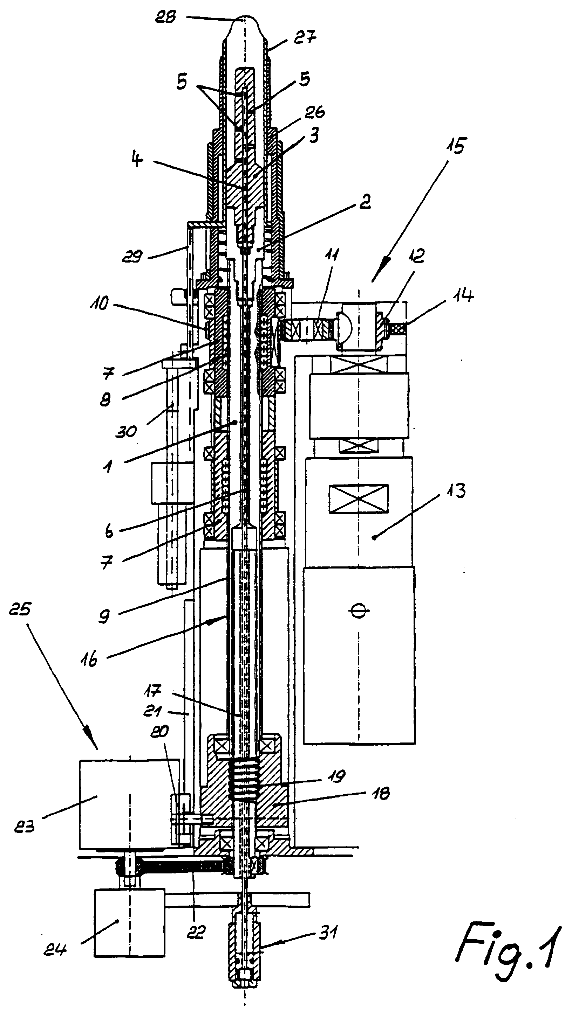

Im einzelnen erkennt man in Figur 1 eine in einem nicht näher bezeichneten Maschinengestell gelagerte Werkzeugspindel 1, die an ihrem vorderen Ende eine Werkzeugaufnahme 2 hat. Darin ist ein Bohr- oder Reibwerkzeug 3 eingesetzt, welches einen Axialkanal 4 für die Zuführung eines Schmiermittels zu den Werkzeugschneiden aufweist. An den Axialkanal 4 schließen deshalb Querbohrungen 5 an, die über die gesamte Länge des Schneidbereichs des Werkzeugs 3 angeordnet sind. Die Zuleitung des Schmiermittels zu dem Werkzeug 3 hin erfolgt durch die Werkzeugspindel 1 hindurch, die dazu einen Axialkanal 6 hat, der sich in axialer Richtung weiter bis zum hinteren Ende der Maschine erstreckt.

Um den Vorschub des Werkzeugs 3 beim Bearbeitungsvorgang zu besorgen, ist die Werkzeugspindel 1 in ihrer Achsrichtung verschieblich gelagert. Dazu dienen zwei im Maschinengestell drehbar gelagerte Buchsen 7, die im Innern achsparallele Längsnuten haben, in denen Kugeln 8 angeordnet sind. Diese Kugeln 8 greifen in achsparallele Längsnuten 9 der Werkzeugspindel 1 ein, so daß die Werkzeugspindel 1 sich mit den drehbar gelagerten Buchsen 7 drehen und unabhängig davon gegenüber den Buchsen 7 in axialer Richtung verschoben werden kann. Um möglichst ein radiales Spiel der Werkzeugspindel 1 zu vermeiden, sind die Buchsen 7 mit dem größtmöglichen Abstand zueinander angeordnet. So liegt in der zurückgezogenen Endlage der Werkzeugspindel 1 die Werkzeugaufnahme 2 unmittelbar am Austrittsende der vorderen Buchse 7 bezogen auf die Vorschubrichtung. Gleichermaßen liegt das rückwärtige Ende der Werkzeugspindel 1 in der vorgeschobenen Endlage unmittelbar am Eintrittsende der hinteren Buchse 7.

Die Werkzeugspindel 1 wird durch einen Drehantrieb 15 in Rotation versetzt, zu dem ein Zahnkranz 10 gehört, der auf der äußeren Umfangsseite der vorderen Buchse 7 sitzt. Über ein Zahnradgetriebe 11 steht dieser Zahnkranz 10 auf der Buchse 7 mit einem Abtriebsrad 12 eines Motors 13 in Verbindung, der zur Werkzeugspindel 1 achsparallel angeordnet ist. Bei dem Motor 13 kann es sich um einen Druckluftmotor handeln, der bei kleiner Baugröße eine relativ hohe Leistung hat.

Der Motor 13 wird im Lastfall mit einer vorgegebenen Drehzahl gefahren, damit auch die Werkzeugspindel 1 und somit das Werkzeug 3 auf einer bestimmten Drehzahl gehalten werden. Der Motor 13 kann somit im günstigsten Leistungsbereich betrieben werden, wobei er selbst nicht nachgesteuert oder -geregelt werden soll. Vielmehr wird lediglich die Drehzahl des Drehantriebs 15 erfaßt, dazu sitzt an einer geeigneten Stelle im Drehantrieb 15 ein Drehzahlmesser 14, Das drehzahlabhängige Signal des Drehzahlmessers 14 wird in einen Rechner gegeben, der danach die Vorschubgeschwindig keit für die Werkzeugspindel 1 bestimmt. Solange die Drehzahl des Drehantriebs 15 beispielsweise beim Beginn eines Bearbeitungsspiels noch nicht bis auf die optimale Lastdrehzahl abgefallen ist, kann mit einem erhöhten Vorschub gefahren werden, der mechanisch von der Drehzahl des Drehantriebs 15 völlig entkoppelt ist. Anstelle eines Druckluftmotors kann für den Motor 13 auch ein Elektromotor eingesetzt werden, der zusätzlich die Möglichkeit bietet, mit einem vorgegebenen Lastmoment betrieben zu werden, das über die Stromaufnahme des Elektromotors ermittelt werden kann.

Der Rechner steuert einen Vorschubantrieb 25, und zwar derart, daß bei den Leerwegen, über die hinweg das Werkzeug 3 nicht im Materialeingriff steht, mit maximaler Vorschubgeschwindigkeit gefahren wird, was sowohl für den Beginn eines Arbeitsspiels wie auch für den Rückzug des Werkzeugs gilt. Im übrigen wird der Vorschubantrieb 25 so geregelt, daß optimale Schnittbedingungen unter Berücksichtigung der günstigsten Lastdrehzahl des Motors 13 eingehalten werden. Hierbei wird zusätzlich noch zwischen einer normalen Bearbeitung und einer Feinbearbeitung unterschieden, wobei im letzteren Falle mit hoher Drehzahl und geringem Vorschub gearbeitet wird.

Wie Figur 1 weiter veranschaulicht, gehört zu dem Vorschubantrieb 25 eine drehbar gelagerte Gewindespindel 17, die in axialer Richtung nicht verschiebbar ist. Die Gewindespindel 17 greift in einen hohlen Abschnitt 16 im rückwärtigen Endbereich der Werkzeugspindel 1 ein. Auf der Gewindespindel 17 ist eine Mutter 18 derart angeordnet, daß sie in Drehrichtung festliegt, wozu ein Schlitten 20 dient, der auf einer achsparallelen Führung 21 des Maschinengestells geführt ist. Diese Führung 21 erstreckt sich über einen axialen Verschiebebereich der Mutter 18, der sich mit dem gesamten Vorschubweg der Werkzeugspindel 1 deckt. Die Werkzeugspindel 1 ist mit ihrem rückwärtigen Ende des hohlen Abschnitts 16 in der Mutter 18 drehbar gelagert, jedoch in Achsrichtung mit der verschieblichen Mutter 18 fest verbunden. Mittels Umlaufkugeln 19, die sowohl in das Gewinde der Gewindespindel 17 als auch in ein Gegengewinde der Mutter 18 eingreifen, wird bei Drehung der Gewindespindel 17 die axiale Verschiebung der Mutter 18 und damit der Vorschub der Werkzeugspindel 1 bewirkt. Der Rotationsantrieb der Gewindespindel 17 erfolgt über ein Riemengetriebe 22 durch einen Vorschubmotor 23, bei dem es sich um einen Schrittmotor handeln kann.

Der Riementrieb 22 treibt ferner ein Meßsystem 24 an, das vornehmlich aus einem inkrementalen Drehgeber besteht. Über die von dem Drehgeber gelieferten Signale kann exakt der Vorschubweg der Werkzeugspindel 1 ermittelt werden, womit eine absolute Wegmessung möglich ist. Das Meßsystem 24 ist entsprechend mit dem Rechner der Maschine verbunden, um für die vorausbestiminbaren Leerwege sowie die Wege der Bearbeitung und der Feinbearbeitung über den Vorschubantrieb 25 den Vorschub des Werkzeugs 3 zu steuern und gegebenenfalls in Abhängigkeit von der über den Drehzahlmesser 14 erfaßbaren Drehzahl der Werkzeugspindel 1 nachzuregeln.

Das Meßsystem 24 kann zur Erfassung des Vorschubweges durch einen Tiefensensor 30 ergänzt sein, der über ein Gestänge 29 mit einem Tastrohr 27 verbunden ist, welches in einer das Werkzeug 3 in seiner zurückgezogenen Endlage umgebenden Hülse 26 angeordnet ist. Auch das Tastrohr 27 umgibt das Werkzeug 3 und hat eine Tastnase 28, die auf das Material des jeweiligen Werkstücks im Randbereich der zu bearbeitenden Bohrung aufsetzbar ist. Da der Abstand zwischen dem Werkzeug und dem Tastende der Tastnase 28 in deren voll ausgefahrener Position bekannt ist, kann über den Eindrückweg der aufsitzenden Tastnase 28 bei angesetztem Bohrgerät über den Tastsensor 30 ein Referenzsignal für den Werkzeugabstand in der Ausgangslage ermittelt werden. Insbesondere ist damit die Festlegung eines Nullpunktes für die Steuerung oder Regelung des Rechners im Zusammenspiel mit dem Meßsystem 24 möglich.

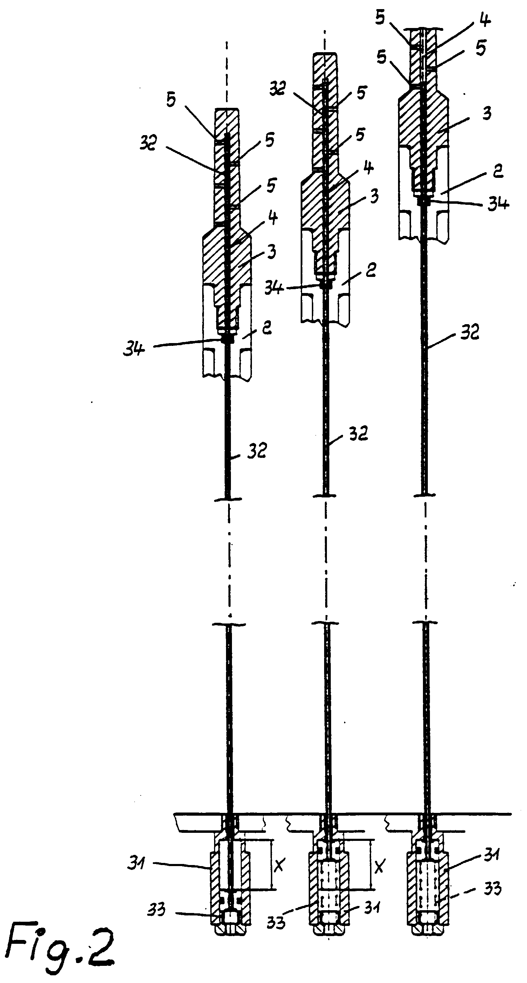

Aus Fig. 1 geht ferner hervor, daß sich der Axialkanal 6 zur Zuleitung des Schmiermittels zum Werkzeug 3 hin nicht nur durch die Werkzeugspindel 1 sondern auch durch die Gewindespindel 17 hindurch bis zu einer Schmiermittel-Zuführvorrichtung 31 erstreckt, die am hinteren Ende des Bohrgerätes angesetzt ist. In dem Axialkanal 6 ist eine Lanze 32 in Gestalt eines Röhrchens angeordnet, wie aus Fig. 2 im einzelnen hervorgeht. Durch diese Lanze 32 wird von der Schmiermittel-Zuführvorrichtung 31 das Schmiermittel so zu dem Werkzeug 3 hintransportiert, daß es dort nur dann durch die betreffenden Querbohrungen 5, die an den Schmiermittelkanal 4 des Werkzeugs 3 anschließen, austritt, wenn es auch tatsächlich gebraucht wird. Das ist bei Materialeingriff des Werkzeugs 3 der Fall, nicht dagegen bei den Leerwegen, die das Werkzeug 3 zu Beginn eines Arbeitsspiels und beim Rückzug aus dem Bohrloch zurückzulegen hat.

Die Lanze 32 reicht bei zurückgezogenem Werkzeug 3 soweit in dessen Schmiermittelkanal 4 hinein, daß sämtliche Querbohrungen 5 verschlossen sind. Über den ersten Leerweg, den das Werkzeug 3 bis zum Bohrloch zurückzulegen hat, wandert die Lanze 32 mit, um nach wie vor sämtliche Querbohrungen 5 verschlossen zu halten. Dazu ist die Lanze 32 in der Schmiermittel-Zuführvorrichtung 31 um den Weg "X" in axialer Richtung verschieblich gehalten, wobei sie mittels einer rückwärtigen Feder 33 in Richtung zur Werkzeugaufnahme 2 der Werkzeugspindel 1 gedrückt wird. Hat die Lanze 32 in Vorschubrichtung das Ende des axialen Verschiebeweges erreicht, findet bei weiterem Vorschub des Werkzeugs 3 eine Relativbewegung zwischen der Lanze 32 und dem Werkzeug 3 derart statt, daß nach und nach die Querbohrungen 5, beginnend von der vorderen Querbohrung 5, für den Schmiermittelaustritt freigegeben werden. Beim Rückzug des Werkzeugs 3 werden in umgekehrter Reihenfolge die Querbohrungen 5 verschlossen, und die Relativbewegung zwischen dem Werkzeug 3 und der Lanze 32 endet, sobald die Lanze 32 am vorderen Stirnende des axialen Schmiermittelkanals 4 des Werkzeugs 3 aufsitzt. Statt dessen kann auch eine anderweitige Mitnahmevorrichtung 34 vorgesehen werden, um das Rückschieben der Lanze 32 bis in die Ausgangslage zu bewirken.

Der Rechner des Bohrgerätes steuert auch die Schmiermittel-Zuführvorrichtung 31. Denn der Schmiermittelbedarf ist nicht nur wegabhängig, sondern muß auch an die jeweiligen Arbeitsbedingungen, wie den Hauptbearbeitungsvorgang oder die Feinbearbeitung, angepaßt werden. Die Schmiermittel-Zuführvorrichtung fördert das Schmiermittel portionsweise in die Lanze 32, wobei zwischen den einzelnen Schmiermittelportionen Luftblasen in die Lanze 32 eingedrückt werden. Hierdurch kommt es zu einer Vernebelung des Schmiermittels beim Austritt aus den Querbohrungen 5 des Werkzeugs 3, wodurch eine gleichmäßige Benetzung der Schneidstellen sichergestellt ist. Außerdem kann die Schmiermittel-Zuführvorrichtung 31 in einem variablen Puls-Pause-Verhältnis betrieben werden, wobei während der Pulsdauer entweder nur Schmiermittel oder Schmiermittelportionen mit Luftblasen in die Lanze 32 eingegeben werden, während während der Pausendauer nur Luft in die Lanze 32 eingeführt wird. Insbesondere kann man dadurch vermeiden, daß ein in der gesamten Schmiermittel-Zuleitung noch vorhandenes Restvolumen des Schmiermittels beim Rückzug des Werkzeugs 3 aus den Querbohrungen 5 ausgebracht wird, weil sich hierbei nämlich der Gesamtraum zur Aufnahme des Schmiermittels in der Schmiermittelzuleitung verringert.

## Patentansprüche

1. Mobiles Bohrgerät zum Festlegen an einer Bohrstelle von großen Werkstücken für Präzisions-Bohrarbeiten mittels eines Werkzeugs (3) mit einem axialen Schmiermittelkanal (4) und daran anschließenden Querbohrungen (5), durch die hindurch ein flüssiges Schmiermittel bis an die Werkzeugschneiden herangeführt wird, und mit einer Werkzeugspindel (1) mit einer Werkzeugaufnahme, die einen axial durchgehenden Kanal (6) haben, durch den hindurch der Schmiermittelzufluß erfolgt und an dessen von der Werkzeugaufnahme abliegenden Ende eine Schmiermittel-Zuführvorrichtung (31) angeordnet ist, und ferner mit Antrieben (15, 25) zum Drehen und zum axialen Vorschieben der Werkzeugspindel (1),
dadurch gekennzeichnet,
daß im Axialkanal (6) der Werkzeugspindel (1) und der Werkzeugaufnahme (2) eine bis in das Werkzeug (3) hineinreichende, hohle Lanze (32) angeordnet ist, die an der Schmiermittel-Zuführvorrichtung (31) gehalten ist und die eine solche Länge hat, daß bei in rückgezogener Endlage befindlichem Werkzeug (3) dessen Querbohrungen (5) für den Schmiermittelaustritt sämtlich von der Lanze (32) verschlossen sind und sich mit dem Vorschub des Werkzeuges (3) nach und nach öffnen, wobei die Schmiermittel-Zuführvorrichtung (31) rechnergesteuert ist und die Schmiermittelzugabe mit zunehmenden Bearbeitungseingriff des Werkzeugs (3) steigert.

2. Bohrgerät nach Anspruch 1,
dadurch gekennzeichnet,
daß die Lanze (32) in der Schmiermittel-Zuführvorrichtung (31) um einen begrenzten Weg axial verschieblich gehalten und von einer Feder (33) in Vorschubrichtung beaufschlagt ist, wobei zwischen der Lanze (32) und der Werkzeugspindel (1) eine Mitnahmevorrichtung (34) oder ein Anschlag angeordnet ist, welche beim Rückzug der Werkzeugspindel (1) über den begrenzten Weg bis zur rückgezogenen Endlage hin die Lanze (32) entgegen der Kraft der Feder (33) mitnimmt.

3. Bohrgerät nach Anspruch 1 oder 2,
dadurch gekennzeichnet,
daß ein Rechner den Schmiermittelzufluß in Abhängigkeit von einer vorgegebenen Lastdrehzahl oder einem vorgegebenen Lastmoment und vom Vorschubweg steuert.

4. Bohrgerät nach einem der Ansprüche 1 - 3,
dadurch gekennzeichnet,
daß von der Schmiermittel-Zuführvorrichtung (31) das Schmiermittel in den Axialkanal (6) bzw. in die Lanze (32) im Axialkanal (6) intermittierend mit zwischen einzelnen Schmiermittelportionen angeordneten Luftblasen eingeführt wird.

5. Bohrgerät nach Anspruch 3 und 4,
dadurch gekennzeichnet,
daß der Rechner die Schmiermittel-Zuführvorrichtung (31) derart steuert, daß die Anpassung an den Schmiermittelbedarf durch ein variables Puls-Pause-Verhältnis erfolgt, wobei während der Pulsdauer entweder nur Schmiermittel oder Schmiermittelportionen mit Luftblasen und während der Pausendauer nur Luft in die Lanze (32) eingeführt wird.

## Claims

1. A mobile boring tool for securing to a boring point of large work-pieces for precision boring work by means of a tool (3) with an axial lubricant channel (4) and trnansverse bores (5) connecting thereto, through which a fluid lubricant is carried to the cutting edges of the tool, and with a tool spindle (1) with a tool attachment point, which have an axial channel (6) going through them, through which the lubricant feed takes place, wherein on the end of the axial channel (6) lying away from the tool attachment point there is a lubricant feeder mechanism (31), and furthermore with drives (15, 25) for rotating and for axial advancing of the tool spindle (1),
characterised in that
in the axial channel (6) of the tool spindle (1) and of the tool attachment point (2) there is a hollow lance (32) extending into the tool (3), wherein this hollow lance (32) is supported on the lubricant feeder mechanism (31) and the length of the hollow lance (32) is such that when the tool (3) is in the withdrawn position the transverse bores (5) of the tool (3) are closed for lubricant outflow entirely by the lance (32), and the transverse bores (5) open progressively as the tool (3) advances, whereby the lubricant feeder mechanism (31) is controlled by a computer and lubricant in-flow increases as the working intervention of the tool (3) increases.

2. A boring tool according to Claim 1
characterised in that
the lance (32) is supported in the lubricant feeder mechanism (31) with limited axial displacement and is struck by a spring (33) in the advancing direction, whereby between the lance (32) and the tool spindle (1) there is a carrying device (34) or a catch, which upon withdrawal of the tool spindle (1) along the limited distance to the withdrawal position carries the lance (32) contrary to the force of the spring (33).

3. A boring tool according to Claim 1 or Claim 2
characterised in that
a computer controls the lubricant in-flow dependent upon a given on-load speed or a given load moment and the advancing distance.

4. A boring tool according to one of the Claims 1 to 3
characterised in that
from the lubricant feeder mechanism (31) the lubricant is fed into the axial channel (6) / into the lance (32) in the axial channel (6) intermittently with air bubbles between individual lubricant portions.

5. A boring tool according to Claim 3 and Claim 4
characterised in that
the computer controls the lubricant feeder mechanism (31) in such a way that adaptation to lubricant requirements is achieved by a variable pulse-pause relationship, whereby during the pulse duration only lubricant or lubricant portions with air bubbles are fed into the lance (32), and during the pause duration only air is fed into the lance (32).

## Revendications

1. Outillage mobile d'alésage de précision à fixer à un point d'alésage de grandes pièces à usiner, lequel outillage est composé d'un outil (3) comprenant un canal axial (4) et des perforations transversales (5) y reliées, par lesquelles un lubrifiant liquide est conduit jusqu'aux tranchants d'outil, et d'une broche (1) munie d'un porte-outil et d'un canal axial (6) débouchant, par lequel le lubrifiant coule, un dispositif d'amenée de lubrifiant ( 31) étant disposé à l'extrémité opposée au porte-outil et des dispositifs d'entraînement (15, 25) étant, de plus, prévus pour la rotation et l'avance axiale de la broche (1),
caractérisé en ce qu'une lance creuse (32) est disposée dans le canal axial (6) de la broche d'outil (1) et le porte-outil (2), laquelle lance creuse (32), maintenue sur le dispositif d'amenée de lubrifiant (31), pénètre dans l'outil (3) et présente une longueur telle qu'elle ferme toutes les perforations transversales (5), prévues pour la sortie du lubrifiant, quand l'outil (3) se trouve en position finale rétractée, et les libère progressivement lors de l'avance de l'outil (3), le dispositif d'alimentation en lubrifiant (31) étant commandé par calculateur et l'apport de lubrifiant augmentant en fonction de la progression du travail de l'outil (3).

2. Outillage d'alésage selon la revendication 1,
caractérisé en ce que la lance (32) est maintenue dans le dispositif d'amenée de lufbrifiant (31) et peut être déplacée axialement sur un parcours limité et est soumise à l'action d'un ressort (33) dans le sens de l'avance, un entraîneur (34) ou une butée étant disposé/e entre la lance (32) et la broche d'outil (1) lequel / laquelle entraîne la lance (32) sur le parcours limité, jusqu'à la position finale rentrée, lors de la rétraction de la broche d'outil (1), en surmontant la force antagoniste du ressort (33).

3. Outillage d'alésage selon la revendication 1 ou 2,
caractérisé en ce qu'un calculateur commande le courant de lubrifiant en dépendance d'une vitesse de rotation en charge ou d'un couple résistant de consigne ou du parcours d'avance.

4. Outillage d'alésage selon l'une des revendications 1 à 3,
caractérisé en ce que le lubrifiant est introduit, par le dispositif d'amenée de lubrifiant (31), dans le canal axial (6) resp. dans la lance (32), installée dans le canal axial (6), l'introduction s'effectuant par intermittence, des bulles d'air étant intercalées entre les portions de lubrifiant.

5. Outillage d'alésage selon les revendications 3 et 4,
caractérisé en ce que le calculateur commande le dispositif d'amenée de lubrifiant (31) de telle sorte que l'adaptation aux besoins de lubrifiant s'effectue dans un rapport pulsation-pause variable, du lubrifiant seul ou des portions de lubrifiant et des bulles d'air étant amenés penétant amenés pendant la durée des pulsations tandis que seul de l'air est introduit dans la lance (32) pendant la durée des pauses.
